# EUROPEAN PATENT SPECIFICATION

(11) **EP 3 265 404 B1**
(45) Date of publication and mention of the grant of the patent: **30.01.2019**
(21) Application number: 16712508.7
(22) Date of filing: 23.02.2016
(51) Int. Cl.: B65D 85/804

(54) **CARTRIDGE FOR THE PREPARATION OF LIQUID PRODUCTS**
KAPSEL ZUR BEREITUNG VON GETRÄNKEN
CAPSULE POUR LA PREPARATION DES BOISSONS

(30) Priority: 02.03.2015 IT TO20150032 U
(43) Date of publication of application: 10.01.2018
(73) Proprietor: Luigi Lavazza S.p.A., 10152 Torino (IT)
(72) Inventor: CABILLI, Alberto, 10152 Torino (IT); BORELLO, Luisa, 10152 Torino (IT); BOLOGNESE, Danilo, 10152 Torino (IT)
(74) Representative: Bosotti, Luciano
(86) International application number: PCT/IB2016/050967
(87) International publication number: WO 2016/139554

(56) References cited:
- WO-A1-2012/077066
- WO-A1-2014/097039
- US-A1- 2014 335 236

## Description

### Technical field

The present disclosure relates to cartridges for the preparation of liquid products, for example for the preparation of beverages such as coffee or tea.

### Technological background

Cartridges (also known as capsules or pods) for preparing liquid products, such as beverages, by introducing into the cartridge liquid (possibly under pressure and/or at high temperature) and/or steam constitute a technological sector that is extremely rich and articulated, as documented, for example, by FR-A-757 358, FR-A-2 373 999 (corresponding to which is US-A-4 136 202), FR-A-2 556 323, GB-A-938 617, GB-A-2 023 086, CH-A-406 561, US-A-3 403 617, US-A-3 470 812, US-A-3 607 297 (corresponding to which is FR-A-1 537 031), WO-A-86/02 537, EP-A-0 199 953, EP-A-0 211 511, EP-A-0 242 556, EP-A-0 468 078, EP-A-0 469 162, EP-A-0 507 905, WO 2010/106516 A1, and EP-A-2 218 653.

A fair share of the solutions described in the documents referred to above primarily regards the preparation of liquid products constituted by beverages such as coffee, tea, chocolate, broth, soups, or various infusions. As regards the preparation of coffee, known from the prior-art documents (for example from EP-A-0 507 905, already mentioned above), are solutions designed to enable preparation of espresso coffee.

Documents, such as for example WO2010/077066 A1, exemplify the possibility of using compostable materials for obtaining at least part of these cartridges.

For instance, WO2010/077066 A1 describes a cartridge comprising a bottom wall having a layered structure with at least one layer of a first compostable material that can undergo softening and/or melting at a temperature comprised between 70° and 120°C, and at least one layer of a second compostable material that does not undergo significant softening and/or melting at that temperature. The aforesaid layers of compostable material are coupled together to form a composite material.

The characteristics that a material must possess so that it can be defined as "compostable", according to a definition commonly adopted also at a patent level (see, for example, in addition to WO2010/077066 A1 referred to above, also documents such as EP-B-0 497 838, EP-B-0 561 982, EP-B-0 788 733, EP-B-0 723 572, EP-B-0 868 275, EP-B-0 971 818, and EP-B-1 842 944), are currently established by the European Norm EN 13432 "Requirements for packaging recoverable through composting and biodegradation - Test scheme and evaluation criteria for the final acceptance of packaging", recently adopted also in Italy as UNI EN 13432. According to this norm, the characteristics that a compostable material must present are listed below.
* Biodegradability, i.e., the metabolic conversion of the compostable material into carbon dioxide. This property is measured with a standard testing method, namely prEN 14046 (also published as ISO 14855: biodegradability under controlled composting conditions). The level of acceptance is 90% biodegradability (with respect to cellulose) to be achieved in less than 6 months.
* Disintegrability, i.e., the fragmentation and loss of visibility in the final compost (absence of visual contamination). Measured with a composting test on a pilot scale (prEN 14045). Samples of the test material are composted together with organic waste for 3 months. At the end, the compost is sifted with a 2-mm sieve. The mass of residue of the test material with a size greater than 2 mm must be less than 10% of the initial mass.

* Absence of adverse effects on the composting process, verified with a composting test on a pilot scale.
* Low levels of heavy metals (below predefined maximum values) and absence of adverse effects on the quality of the compost (e.g., reduction of the agronomic value and presence of ecotoxicological effects on plant growth). A plant-growth test (test OECD 208, modified) is carried out on samples of compost where degradation of the test material has occurred. No difference must be observed as compared to a control compost.
* Other chemico-physical parameters that must not change after degradation of the material under study: pH; saline content; volatile solids; N; P; Mg; K.

It will be appreciated that a biodegradable material is not necessarily compostable because it must also disintegrate during a composting cycle. On the other hand, a material that breaks up during a composting cycle into microscopic pieces that are not then, however, totally biodegradable is not compostable. UNI EN 13432 is a harmonized norm; i.e., it has been published in the Official Journal of the European Union and is adopted in Europe at a national level and envisages presumption of compliance with the European Directive No. 94/62 EC, on packages and package waste.

Capsules or cartridges for the preparation of coffee (or tea or other liquid products such as beverages) that are compostable according to the norm UNI EN 13432 can be disposed of in organic recycling (composting), for example envisaging that the spent capsules undergo a process of disintegration within a pre-set time (3 months).

### Object and summary

The object of the present invention, which has the characteristics recalled in Claim 1, is to provide a solution that is able to combine characteristics of compostability and contained cost with a particular effectiveness of application and use of the cartridge.

Advantageous developments of the invention form the subject of the dependent claims.

The claims form an integral part of the technical teaching provided herein in relation to the invention.

### Brief description of the figures

The invention will now be described, purely by way of non-limiting example, with reference to the annexed figures, wherein:
- Figure 1 is a perspective view of a cartridge according to the invention; and
- Figure 2 is a perspective cut-away view of a cartridge according to the invention.

### Detailed description

The references used in the annexed figures are provided merely for convenience and hence do not define the extent of protection or the scope of the embodiments.

This being said, the reference number 10 designates as a whole a cartridge (or pod or capsule, these terms being here used as equivalent to one another) for preparing a liquid product by introducing liquid and/or steam into the cartridge.

The liquid product in question may be constituted by a beverage such as coffee (for instance, espresso coffee) or tea, for example obtained by introducing into the cartridge liquid and/or steam under pressure and at a high temperature (i.e., hot).

In any case, the repeated reference, in the framework of the present detailed description, to the preparation of a particular beverage is in no way to be understood as limiting the scope of the invention, which is altogether general.

The cartridge 10 contains a dose 12 of at least one substance that is able to form the aforesaid product via the aforesaid liquid and/or steam.

The dose 12 may be constituted by powdered coffee, or by another precursor of a liquid product such as, for example, a beverage, tea, chocolate either in powdered or granular form, products for preparing broths, soups, drinks, and infusions of various nature. This list is to be understood as purely having the nature of example and is in no way binding.

In the structure of the cartridge 10, which is shaped as a whole substantially like a tray or small cup inside which the dose 12 is present, there may be distinguished:
- a body 14, comprising a side wall 140 and a bottom wall 142 that closes the body 14 at one end of the side wall 140; and
- a closing foil (seal 16) that closes the cartridge 10 at the opposite end with respect to the bottom wall 142.

For instance, the material of the foil 16 may be suited to being connected in a fluid-tight way, for example by heat-sealing, to the side wall 140 of the body 14 of the cartridge, for instance at a flange 144 that surrounds the mouth part of the aforesaid body 140.

Likewise, the material of the bottom wall 142 may be suited to being connected in a fluid-tight way, for example by heat-sealing, to the side wall 140 of the body 14 of the cartridge, for instance at a flange 146 that extends towards the inside of the bottom part of the body 140.

The bottom wall 142 may also be made of a single piece with the side wall 140.

In this connection, it will be appreciated that characteristics here exemplified with reference to either the sealing foil 16 or the bottom wall 142 may be applied to the other, with the sealing foil 16 and the bottom wall 142 that may be either the same as or different from one another.

The bottom wall 142, here represented as plane or substantially plane, may also present a vaulted shape, for example concave with the concavity facing the outside or the inside of the cartridge 10. Also in this case, the choice of the above shape is not imperative.

As exemplified in the annexed figures, the body 14 may present a tray-like conformation diverging from the bottom wall 142 towards the end closed by the sealing foil 16. This divergent conformation may, for example, be a frustoconical conformation. This conformation is not on the other hand imperative in so far as the cartridge 10 may present as a whole different shapes, for example a prismatic shape, or the shape of a truncated pyramid, etc.

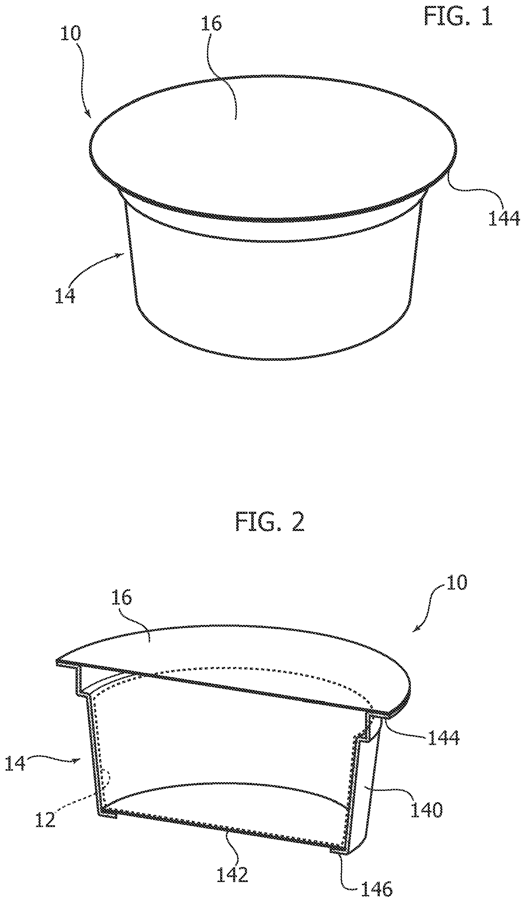

Consequently, it will be appreciated that the perspective view of Figure 2 is a cut-away view, in which half of the cartridge 10 is visible, and it is assumed that the non-visible half is specularly symmetrical to the visible half.

The sequence of use of the cartridge 10 may be substantially the same as the sequence of use of the cartridge described in EP-A-0 507 905 or WO2012/077066 A1 already referred to above, which renders any repetition of the corresponding description superfluous.

In brief, and according to criteria in themselves known:
- in an initial step, the cartridge 10 is laid on an array of bottom tips, which may have a hollow structure, substantially resembling a syringe needle, with one or more openings that enable off-flow of the liquid product prepared using the cartridge 10;
- when the cartridge 10 is laid on the aforesaid bottom tips, its bottom 142 (whether plane or concave, with concavity facing the outside or the inside of the cartridge) rests on the aforesaid tips, with the top foil 16 exposed to another array of tips that are designed to perforate it; the latter tips can hence advance towards the foil 16 (under the action of respective motor means and/or as a result of a movement imparted on the cartridge) and penetrate into the sealing foil 16, perforating it, so that the cartridge 10 is opened on its upper side;
- in the case where the bottom 142 has not already been previously perforated, the machine for preparing liquid products (for example, a coffee brewer, which is also of a known type) may be activated, thus causing water at a temperature in the region of 90-100°C and at a pressure in the region of 8-10 atm or higher to flow through the holes formed in the top foil 16 (for example, via a pump);
- the hot water under pressure that flows into the cartridge 10 can perform a dual function: in the first place, the hot water starts to penetrate into the dose 12 starting off the process (which may be referred to, perhaps in a not altogether proper way, as "infusion") that leads to preparation of the beverage; in the second place, the pressure that is set up within the cartridge 10 causes the bottom 142 to undergo deformation and be pushed against the tips on which the bottom wall 142 itself rests;
- in an initial step, penetration of the tips into the bottom wall 142 may be only partial, with the tips that start only to deform the bottom 142 of the cartridge 10, creating dimples therein; in a subsequent step, the bottom tips 100 start to penetrate the bottom wall 142 of the cartridge 10 so that the cavities provided in these tips (as has already been said, in various embodiments these are hollow tips, which resemble syringe needles) enter in communication with the internal volume of the cartridge 10 so that the infusion of coffee starts to come out of the cartridge 10 and to flow out through the bottom tips;
- the mechanism of perforation of the bottom wall 142 of the cartridge 10 may then proceed until practically each of the bottom tips has perforated the bottom wall 142 of the cartridge 10, penetrating into the cartridge 10 itself, so that the axial cavity of each tip provides an out-flow path for delivery of the infusion of coffee;
- the above condition is maintained up to completion of preparation of the beverage; at this point, the pump that sends the hot water under pressure into the cartridge 10 is deactivated, the top tips (if this has not already happened previously) move away from the foil 16, which they have previously perforated, and the spent cartridge 10 can be taken out of the machine and replaced by a new cartridge in order to proceed to preparation of a new liquid product (for example, coffee).

The sequence of use just described is evidently provided by way of example, and admits of different variants.

For instance, according to a mode of use that may prove preferential, perforation of the bottom wall 142, instead of occurring only following upon introduction of the liquid and/or steam into the cartridge 10, may also occur at least in part in "cold" conditions by exploiting interference of the tips with the bottom 142, i.e., following upon an action of perforation of the bottom 142 of the cartridge 10 by the bottom tips (before, together with, or after perforation of the sealing foil 16) even before the liquid and/or steam starts flowing into the cartridge 10.

According to the invention, the bottom wall 142 may include (and optionally be constituted by) a plastic material compostable according to UNI EN 13432.

Optionally, also the side wall 140 may include (and optionally be constituted by) a material (e.g., plastic) compostable according to UNI EN 13432.

Once again optionally, also the top wall or sealing foil 16 may include (and optionally be constituted by) a material compostable according to UNI EN 13432.

Recourse to the two optional solutions recalled above makes it possible to obtain, with certain geometries and paying attention to the maximum values of thickness of compostability of the materials used, a cartridge that is compostable as a whole, it being understood that the bottom wall 142, the side wall 140, and the top wall or sealing foil 16 may comprise materials that may be either the same as one another or different from one another: for example (this is just one of the possible examples), the bottom wall 142 could be made of a single piece with the wall 140.

As regards the choice of the materials, the plastic material of the bottom 142 may be chosen from among compostable materials (according to a term sometimes used in the sector, a "bio" material), such as, for example: polymers extracted from biomass (for instance, polysaccharides such as cellulose-starch, lipids, proteins); synthetic polymers (for example, polylactic acid - PLA - deriving from fermentation of starch); polymers produced by genetically modified micro-organisms or bacteria (for example, polyhydroxyalkanoates - PHA); and polymers from fossil monomers (for example, polybutylsuccinate - PBS); also belonging in this category are mixtures of the above (the so-called "compounds") with or without the introduction of additives, such as nanoparticles (e.g., talcum, Cloisite).

According to the invention, the plastic material of the bottom 142 may present a perforability of not less than 12 N (according to aSTM F 1306 90, rate of penetration: 300 mm/min).

According to the invention, the bottom 142 may have a thickness of between 20 µm and 2 mm, preferably between 50 µm and 0.5 mm and, in a particularly preferred way, between 60 µm and 300 µm.

As has already been said, a preferential mode of use may envisage initial perforation of the bottom 142 by interference with the perforation tips, i.e., following upon an action of perforation of the bottom 142 of the cartridge 10 by the bottom tips (before, together with, or after perforation of the sealing foil 16), even before the liquid and/or steam starts flowing into the cartridge 10.

A particularly high level of effectiveness of application and use has been found to exist when the bottom 142, exposed (in cold conditions, i.e., before start of the flow of hot liquid and/or steam into the cartridge 10) to the action of perforation of a bed of conical tips of a height of 3.5 mm and a diameter of the base of 3.9 mm that are made to advance through the bottom 142 (which, before being perforated, undergoes plastic deformation) for an amount equal to 2.5 mm, is perforated over at least 25% of the positions where the aforesaid perforation tips are located. These tips may be present in a number of between 10 and 25 for a cartridge of current dimensions, and in this case the percentage of 25%, when it is such as to give rise to a non-integer value, is to be understood as rounded off to the closest integer.

## Claims

1. A cartridge (10) containing a dose (12) of at least one substance for use in the preparation of a liquid product, said cartridge including a side wall (140), a bottom wall (142), through which said liquid product is able to flow from the cartridge (10), and a wall (16) for closing the cartridge (10) at the end opposite to said bottom wall (142), **characterized in that** said bottom wall (142):
- includes a compostable plastic material having a perforability of not less than 12 N (according to aSTM F 1306 90, rate of penetration: 300 mm/min); and
- has a thickness of between 50 µm and 0.5 mm, preferably between 60 µm and 300 µm.

2. The cartridge (10) according to Claim 1, wherein said plastic material of the bottom (142) is chosen from among bio plastics such as PLA, PHA, and PBS.

3. The cartridge (10) according to Claim 1 or Claim 2, wherein said side wall (140) and said bottom wall (142) include a compostable material.

4. The cartridge (10) according to any one of the preceding claims, wherein the bottom wall (142) is made of a single piece with the side wall (140).

5. The cartridge (10) according to any one of the preceding claims, wherein said bottom (142), exposed to the action of perforation of a bed of conical tips of a height of 3.5 mm and a diameter of the base of 3.9 mm that are made to advance through the bottom (142) for an amount equal to 2.5 mm, is perforated over at least 25% of the positions where the aforesaid perforation tips are located.

## Patentansprüche

1. Kartusche (10), welche eine Dosis (12) mindestens einer Substanz zur Verwendung bei der Herstellung eines flüssigen Produkts enthält, wobei die Kartusche eine Seitenwand (140), eine Bodenwand (142), durch die das flüssige Produkt aus der Kartusche (10) fließen kann, und eine Wand (16) zum Verschließen der Kartusche (10) an dem Ende gegenüber der Bodenwand (142) aufweist, **dadurch gekennzeichnet, dass** die Bodenwand (142):
- ein kompostierbares Kunststoffmaterial mit einer Perforierbarkeit von nicht weniger als 12 N aufweist (gemäß ASTM F 1306 90, Penetrationsrate: 300 mm/min); und
- eine Dicke zwischen 50 µm und 0,5 mm, vorzugsweise zwischen 60 µm und 300 µm aufweist.

2. Kartusche (10) nach Anspruch 1, wobei das Kunststoffmaterial des Bodens (142) aus Biokunststoffen, wie PLA, PHA und PBS ausgewählt ist.

3. Kartusche (10) nach Anspruch 1 oder Anspruch 2, wobei die Seitenwand (140) und die Bodenwand (142) ein kompostierbares Material aufweisen.

4. Kartusche (10) nach einem der vorhergehenden Ansprüche, wobei die Bodenwand (142) aus einem einzigen Stück mit der Seitenwand (140) besteht.

5. Kartusche (10) nach einem der vorhergehenden Ansprüche, wobei der Boden (142), der für die Wirkung der Perforation eines Betts konischer Spitzen mit einer Höhe von 3,5 mm und einem Durchmesser der Basis von 3,9 mm freiliegt, die durch den Boden (142) für einen Betrag gleich 2,5 mm eindringen gelassen werden, über mindestens 25 % der Positionen perforiert ist, wo die vorgenannten Perforationsspitzen angeordnet sind.

## Revendications

1. Cartouche (10) contenant une dose (12) d'au moins une substance pour une utilisation dans la préparation d'un produit liquide, ladite cartouche incluant une paroi latérale (140), une paroi de fond (142), à travers laquelle ledit produit liquide peut s'écouler à partir de la cartouche (10), et une paroi (16) pour fermer la cartouche (10) à l'extrémité opposée à ladite paroi de fond (142), **caractérisée en ce que** ladite paroi de fond (142) :
- inclut un matériau plastique compostable ayant une aptitude à la perforation d'au moins 12 N (selon aSTM F 1306 90, vitesse de pénétration : 300 mm/m) ; et
- présente une épaisseur de 50 µm à 0,5 mm, de préférence de 60 µm à 300 µm.

2. Cartouche (10) selon la revendication 1, dans laquelle ledit matériau plastique du fond (142) est choisi parmi des plastiques bio, tels que PLA, PHA, et PBS.

3. Cartouche (10) selon la revendication 1 ou la revendication 2, dans laquelle ladite paroi latérale (140) et ladite paroi de fond (142) comprennent un matériau compostable.

4. Cartouche (10) selon l'une quelconque des revendications précédentes, dans laquelle la paroi de fond (142) est constituée d'une seule pièce avec la paroi latérale (140).

5. Cartouche (10) selon l'une quelconque des revendications précédentes, dans laquelle ledit fond (142), exposé à l'action de perforation d'un lit d'extrémités coniques d'une hauteur de 3,5 mm et d'un diamètre de la base de 3,9 mm qui sont constitués pour s'avancer à travers le fond (142) sur une quantité égale à 2,5 mm, est perforé sur au moins 25 % des positions où les extrémités de perforation citées précédemment sont disposées.
